# EUROPEAN PATENT APPLICATION

(11) **EP 2 615 840 A2**
(43) Date of publication of application: **17.07.2013**
(21) Application number: 12191968.2
(22) Date of filing: 09.11.2012
(51) Int. Cl.: H04N 21/00

(54) **Method and apparatus for receiving application data**

(30) Priority: 12.01.2012 CN 201210009050
(71) Applicant: Huawei Technologies Co., Ltd., Longgang District, Shenzhen Guangdong 518129 (CN)
(72) Inventor: Lv, Wei, 518129 Shenzhen (CN)
(74) Representative: Epping - Hermann - Fischer

(57) **Abstract**

Embodiments of the present invention provide a method for receiving application data, where the method includes: receiving, by a client, application signaling, where the application signaling includes visibility setting, a receiving condition, and an access path of application data, and visibility of the application data is set to invisible; judging whether the client satisfies the receiving condition of the application data; and if the client satisfies the receiving condition of the application data, receiving the application data according to the access path of the application data. Meanwhile, the embodiments of the present invention further provide a method for sending application data and a corresponding client. With the technical solutions provided in the embodiments of the present invention, a defect that directional sending of application data fails to be implemented according to existing HBBTV specifications can be overcome.

## Description

### FIELD OF THE INVENTION

The present invention relates to the field of television technologies, and in particular, to a method and an apparatus for receiving application data.

### BACKGROUND OF THE INVENTION

According to a definition in HBBTV (Hybrid Broadcast and Broadband TV, hybrid broadcast and broadband TV) specifications, a Hybrid terminal may be connected to a broadcasting network and a broadband network in parallel. The broadcasting network may be a DVB (Digital Video Broadcasting, digital video broadcasting) network, for example, DVB-T (digital video broadcasting-terrestrial system), DVB-S (digital video broadcasting-satellite system), or DVB-C (digital video broadcasting-cable system). Through the broadcasting network, the Hybrid terminal may receive standard broadcast video and audio (linear A/V content), application data (Application), and application-related signaling data (Signaling). In addition, the Hybrid terminal may also be connected to a broadband network that has a return channel, and the Hybrid terminal may also receive video and audio (including video on demand VOD), application data, and the like. The application data (Application) refers to various applications, for example, a video advertisement, a game, an on-line textual and graphical introduction, and the like. The application-related signaling (Signaling) refers to signaling used for a notification, and includes information such as an application address and an attribute (may be used to set a type, visibility, and priority of an application).

A definition of "visibility" of an Application in the HBBTV specifications is as shown in the following table.

| MPEG-2 encoding | XML Encoding | Description |
|---|---|---|
| 00 | NOT_VISIBLE_A LL | This application shall not be visible either to applications via an application listing API (if such |
| | | an API is supported by the terminal) or to users via the navigator with the exception of any error reporting or logging facility, etc. |
| 01 | NOT_VISIBLE_U SERS | This application shall not be visible to users but shall be visible to applications via an application listing API (if such an API is supported by the terminal). |
| 10 | | Reserved_future_use |
| 11 | VISIBLE ALL | This application can be visible to users and shall be visible to applications via an application listing API (if such an API is supported by the terminal). |

It can be seen from the foregoing table that, according to the HBBTV specifications, whether application data is visible to a Hybrid terminal user is determined by a visibility value that is set by an operator. For all terminal users, application data is completely invisible, or cannot be obtained through a navigator but can be obtained through an API (Application Programming Interface, application programming interface), or is visible. Setting listed in the specifications is directed to all terminal users. It cannot be set that application data is visible only to a part of users. Therefore, the operator cannot implement a function of sending application data to a specific user by using an existing technology in the HBBTV specifications.

### SUMMARY OF THE INVENTION

To solve a technical problem that directional receiving of application data fails to be implemented in existing HBBTV specifications, an embodiment of the present invention provides a method for receiving application data, where the method includes: receiving, by a client, application signaling, where the application signaling includes visibility setting, a receiving condition, and an access path of application data, and visibility of the application data is set to invisible; judging whether the client satisfies the receiving condition of the application data; and if the client satisfies the receiving condition of the application data, receiving the application data according to the access path of the application data.

Another embodiment of the present invention provides a method for sending application data, where the method includes: setting visibility of application data to invisible and setting a receiving condition of the application data; sending application signaling, where the application signaling carries visibility setting, the receiving condition, and an access path of the application data; and sending the application data, so that a client that satisfies the receiving condition of the application data receives the application data through the access path of the application data.

An embodiment of the present invention further provides a client, configured to implement the method for receiving application data provided in the embodiment of the present invention, including: a receiving module, configured to receive application signaling, where the application signaling includes visibility setting, a receiving condition, and an access path of the application data, and visibility of the application data is set to invisible; and a judging module, configured to judge whether the client satisfies the receiving condition received by the receiving module. The receiving module is further configured to receive the application data according to the access path of the application data if the judging module judges that the client satisfies the receiving condition of the application data.

It can be seen from the foregoing technical solutions provided in the embodiments of the present invention that, in the embodiments of the present invention, visibility of application data is set to invisible, which, in combination with a receiving condition that is of the application data and is added to application signaling, ensures that a client receives the application data according to an access path of the application data only after determining that the client satisfies the receiving condition of the application data. With the foregoing technical solutions, application data sent to a specific user is implemented, thereby overcoming a defect that directional sending of application data fails to be implemented in the existing HBBTV specifications, and satisfying a demand of an operator in this aspect.

### BRIEF DESCRIPTION OF THE DRAWINGS

FIG. 1 is an architecture diagram of a system for implementing sending of application data in a Hybrid TV field according to an embodiment of the present invention;
FIG. 2 is a schematic diagram of a method for sending application data according to an embodiment of the present invention;
FIG. 3 is a schematic diagram of a method for receiving application data according to an embodiment of the present invention;
FIG. 4 is a schematic structural diagram of a client according to an embodiment of the present invention; and
FIG. 5 is a schematic structural diagram of a server according to an embodiment of the present invention.

### DETAILED DESCRIPTION OF THE EMBODIMENTS

To help persons of ordinary skill in the art understand and implement the present invention, embodiments of the present invention are described with reference to the accompanying drawings.

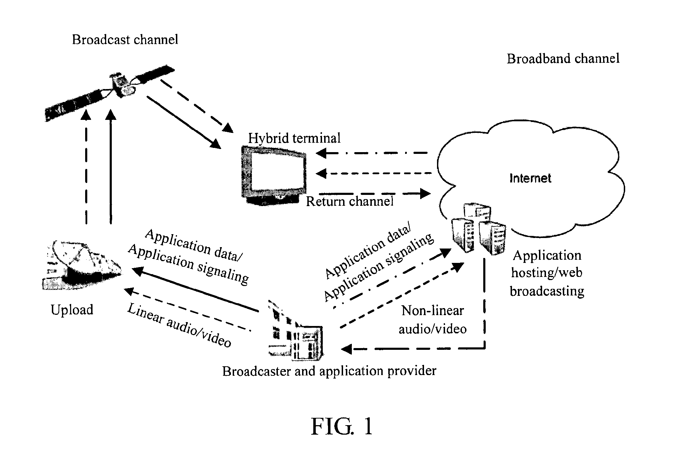

FIG. 1 is an architecture diagram of a system for implementing directional sending of application data in a Hybrid TV field.

As shown in the figure, a Hybrid terminal may be connected to a broadcasting network and a broadband network in parallel, and receives application data (Application) or application signaling (Signaling) over a broadcast channel or a broadband channel.

The broadcasting network may be a cable television network, and may also be a DVB (Digital Video Broadcasting, digital video broadcasting) network, for example, DVB-T (digital video broadcasting-terrestrial system), DVB-S (digital video broadcasting-satellite system), or DVB-C (digital video broadcasting-cable system). The broadcast channel is a channel over which the Hybrid terminal receives application data or application signaling through the broadcasting network. The broadband channel is a channel over which the Hybrid terminal receives application data or application signaling through the broadband network. The broadband network generally refers to the Internet (internet). A manner for the Hybrid terminal to access the broadband network is not limited, and may be wired access and may also be wireless access, which is not limited in the embodiments of the present invention.

The application data may be audio or video content, and includes various content such as an advertisement, an audio or video recommendation, and a game, and may also be textual and graphical data for online introduction and recommendation. The application signaling needs to include an access path (address) and attribute information of the application data. The attribute information of the application data may be information for setting a type, visibility, and priority of the application data, and the like.

Broadcasters and application providers are operators of a Hybrid TV service, and provide for a Hybrid terminal user a traditional linear audio/video broadcast service (sending a service over a broadcast channel for an unidirectional live broadcast) and a non-linear audio/video broadcast service (sending a service over a broadband channel, which may implement video on demand for a user). In addition, various different types of application data services such as an advertisement and a game are included.

As mentioned in the foregoing, according to a definition of visibility of application data in existing HBBTV specifications, the application data is either visible to all terminal users or invisible to all terminal users, which fails to satisfy a demand that an operator sends application data to a specific user.

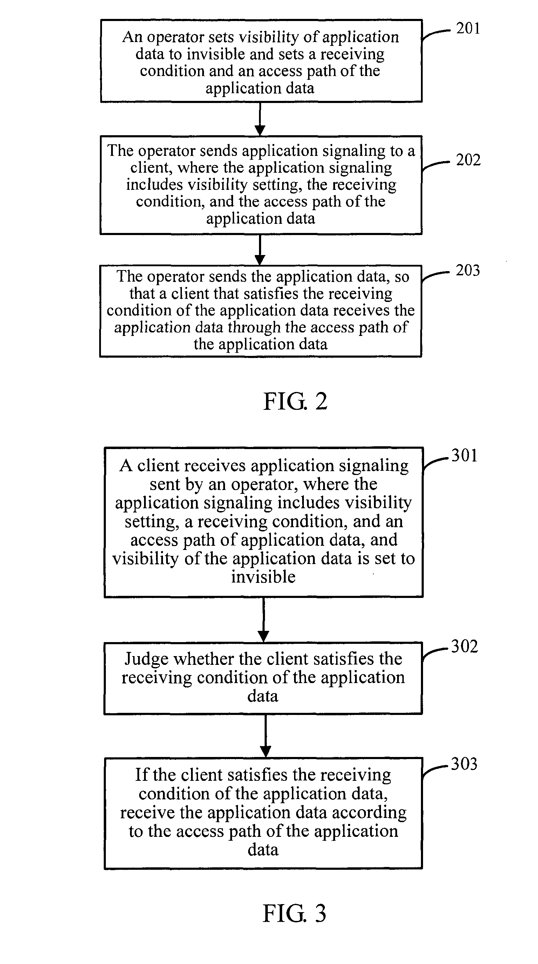

In view of this, an embodiment of the present invention provides a method for directionally sending application data in a Hybrid TV field. With reference to the system architecture diagram shown in FIG. 1, FIG. 2 is schematic diagram of a method for sending application data according to an embodiment of the present invention. With the method, application data may be directionally sent to a specific client. The client is a user terminal that may be connected to a broadcasting network and a broadband network in parallel, may receive application data or application signaling over either a broadcast channel or a broadband channel, and includes, but is not limited to, a Hybrid TV, a set top box, a PC, and the like.

Steps shown in FIG. 2 are described as follows:
Step 201: An operator of a Hybrid TV service sets visibility of application data to "NOT_VISIBLE_ALL", that is, invisible, and sets a receiving condition and an access path of the application data.

To implement directional sending of the application data, a "visibility" attribute of the application data needs to be set to "NOT_VISIBLE_ALL". In this way, it ensures that all clients do not obtain relevant information of the application data by obtaining an interface of an application data list or a navigator of an EPG (Electronic Program Guide, electronic program guide), and in combination with the receiving condition that is of the application data and is set by the operator, only a client that satisfies the receiving condition can obtain the relevant information of the application data.

Setting the receiving condition and access path of the application data by the operator is described in the following by using an example:
If the operator desires to send a video advertisement on a DVB channel to a client with "a mac address falling within a range from xxxx to yyyy",
   the operator needs to set a relevant access path of the DVB channel of the video advertisement to be sent, including a frequency of the DVB channel, a coincidence rate of the DVB channel, a polarization direction of the DVB channel, an id of a TS stream of the DVB channel, an original network id of the channel, and a service ID of the DVB channel.

A path of application data in application signaling may be described as follows:
TP_frequency=//frequency of the DVB channel
DVB_Symborate=//coincidence rate of the DVB channel
DVB_Polarity=//polarization direction of the DVB channel
DVB_transportStreamId=//id of a TS stream of the DVB channel
DVB_Original_network_id=//original network id of the channel
DVB_serviceID=//service ID of the DVB channel

In this case, because the operator sets the receiving condition of the application data to a Hybrid terminal with "a mac address falling within a range from xxxx to yyyy", after receiving application signaling, a Hybrid terminal analyzes whether its mac address falls within this range. If yes, the Hybrid terminal displays an access path of the video advertisement to a user. If the user chooses to watch the video advertisement, the client may switch to the DVB channel according to relevant information of the DVB channel, where the relevant information of the DVB channel is carried in the application signaling, and receive a video stream and play the video stream. If the Hybrid terminal, through analysis, determines that its mac address does not fall within this receiving range, it automatically ignores this application signaling message. In this way, the directional sending of the application data in the Hybrid TV field is implemented. When sending application signaling over a broadband channel, the operator may also set other diversified receiving conditions of application data, for example, may set that application signaling (Signaling) is sent to a terminal with a specific number, a specific user group or user, or a user that watches content such as a specific channel/VOD (Video On Demand, video on demand).

In addition, the operator may also set a more complex and intelligent receiving condition of the application data in combination with a watching record of a user. For example, the operator sets that a video advertisement is sent to each user satisfying the condition only once. When a video advertisement is sent to a client and the client has played advertisement content once, a play record is generated for this advertisement. After receiving application signaling that has the same content next time, the client can find, according to the play record, that the content has been played once, and therefore, does not display information included in the application signaling to the user. In this way, setting of the operator for playing only once is satisfied.

Step 202: The operator sends application signaling to a client, where the application signaling includes visibility setting, the receiving condition, and the access path of the application data. The application data may be an advertisement, a game, a video fragment, an on-line recommendation and introduction, and the like. The application signaling (Signaling) is closely related to the application data (Application), and includes information such as the access path (address), and an attribute (may be used to set a type, visibility, and priority of the application data) of the application data. In an embodiment of the present invention, in addition to the foregoing information, the application signaling further needs to carry the receiving condition of the application data, where the receiving condition of the application data is set by the operator.

By using steps 201 and 202, the operator sets that the application data is invisible to all users, and in combination with a corresponding receiving condition, it ensures that the application data is sent to only a client that satisfies the receiving condition of the application data. In this way, the directional sending of the application data is implemented.

For sending of application signaling (Signaling), in an embodiment of the present invention, the operator sends application signaling over a broadband channel. The operator may set diversified receiving conditions of application data, for example, may set that a client with "a mac address falling within a range from xxxx to yyyy" receives the application data, and a range of a receiving terminal may be set according to an IP address, or a range of a receiving terminal may be set according to a geographic location of a client or user information, which may satisfy a demand that the operator sends specific application data to a specific user. In another embodiment of the present invention, the operator may also send application signaling over a broadcast channel.

Step 203: The operator sends the application data, so that a client that satisfies the receiving condition of the application data receives the application data through the access path of the application data.

With reference to the method for sending application data disclosed in the foregoing embodiment, another embodiment discloses a method for receiving application data, so as to implement directional receiving of application data in a Hybrid TV field.

FIG. 3 is a schematic diagram of a method for receiving application data according to an embodiment of the present invention. Steps of the method are described as follows:
Step 301: A client receives application signaling sent by an operator, where the application signaling includes visibility setting, a receiving condition, and an access path of application data, and visibility of the application data is set to invisible.

As described in the foregoing, the visibility of the application data is set to invisible. In combination with the receiving condition of the application data, directional receiving of the application data may be implemented.

Step 302: Judge whether the client satisfies the receiving condition of the application data.

After receiving the application signaling, the client first parses the receiving condition of the application data, where the receiving condition of the application data is included in the application signaling; and if the receiving condition is satisfied, receives the application data according to the access path of the application data, where the access path of the application data is included in the application signaling.

Step 303: If the client satisfies the receiving condition of the application data, receive the application data according to the access path of the application data.

After the client judges that the client satisfies the receiving condition of the application data, the client may automatically receive the application data through the access path of the application data without selection of a user; and may also firstly prompt relevant information that includes the access path of the application data to a user, and then receive the application data through the access path of the application data after confirmation of the user. After the client judges that the client satisfies the receiving condition of the application data, the operator may set in the receiving condition whether the client automatically receives the application data or receive the application data after user selection.

After judgment of the client, if the client finds that the client does not satisfy the receiving condition of the application data, the client automatically ignores this application signaling message, that is, neither automatically receives the application data nor displays information that is relevant to the application data to a user.

The client receives the application data according to the access path of the application data generally in two ways: One is receiving the application data over a broadcast channel. The operator describes an attribute of a DVB channel of the application data in detail in the access path of the application data. When receiving this type of application data, the client only needs to switch a channel to the channel of the application data, and the application data may be received over the broadcast channel. For example, the operator sends a video advertisement on a DVB channel 10 to the client, and the client may receive the video advertisement by switching to the channel 10; and
the other way is that the client receives the application data over a broadband channel. In this case, the client also needs to request, according to the access path, the operator to send the application data. After receiving a request, the operator sends the application data to the client over a broadband channel. For example, the client displays an access path of a video on demand movie for a user. If the user chooses to watch the movie, the client needs to request, according to the access path of the movie, the operator to send the movie, and then receives the movie over a broadband channel and plays the movie.

The operator sends the application data (Application) over a broadcast channel, which may effectively use an existing TS (Transport Stream, transport stream) stream multiplexing technology in DVB (Digital Video Broadcasting, digital video broadcasting), implement an original function of saving a bandwidth of the DVB, achieve a notable effect on an unmanaged network (unmanaged network), and may not rely on a requirement for a bandwidth and network QoS (Quality of Service, quality of service) of a broadband channel.

Corresponding to the sending of application data over a broadcast channel, if application data is non-linear audio and video content, for example, user-demanded audio or video, a return channel (as shown in FIG. 1) dedicated on a broadband channel needs to be relied on to interact with the operator. Therefore, a broadband channel needs to be used for sending application data, which may satisfy some specific requirements of the operator and user.

An embodiment of the present invention provides a client, configured to implement the method for directionally sending application data disclosed in the foregoing embodiment. The client includes, but is not limited to, a Hybrid TV terminal, a set top box, a PC, and the like.

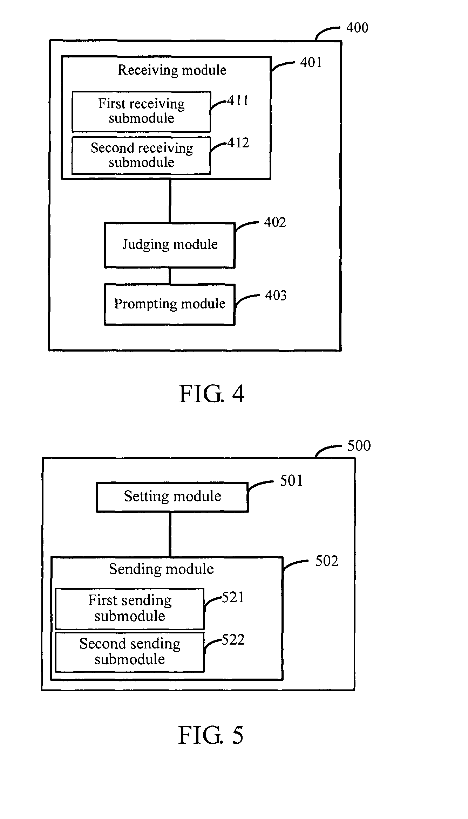

FIG. 4 is a schematic structural diagram of a client 400 according to an embodiment of the present invention. Components of the client 400 are described as follows:
a receiving module 401, configured to receive application signaling, where the application signaling includes visibility setting, a receiving condition, and an access path of application data, and visibility of the application data is set to invisible; and
a judging module 402, configured to judge whether the client satisfies the receiving condition of the application data, where the receiving condition of the application data is received by the receiving module 401.

The receiving module 401 is further configured to receive the application data according to the access path of the application data if the judging module judges that the client satisfies the receiving condition of the application data.

In another embodiment of the present invention, the client 400 further includes a prompting module 403, configured to, when the judging module 402 judges that the client satisfies the receiving condition of the application data, prompt a user to make confirmation and after the user makes confirmation, instruct the receiving module 401 to receive the application data according to the access path of the application data.

As described in the foregoing, the client may receive application signaling or application data over a broadband channel, and may also receive application signaling or application data over a broadcast channel. Therefore, in another embodiment of the present invention, the receiving module 401 of the client 400 may further be divided into a first receiving submodule 411 and a second receiving submodule 412, where
the first receiving submodule 411 is configured to receive the application signaling or the application data over a broadband channel; and
the second receiving submodule 412 is configured to receive the application signaling or the application data over a broadcast channel.

With the client provided in this embodiment, after receiving application signaling, the client first analyzes a receiving condition of application data, where the receiving condition of the application data is included in the application signaling. In the case that the receiving condition of the application data is satisfied, the client displays relevant information of the application data to a user, where the relevant information of the application data includes an access path, and the user may choose to receive the application data or request sending of the application data according to the information.

If it is determined, through analysis, that the receiving condition of the application data is not satisfied, the client directly ignores this application signaling message, and does not display the relevant information of the application data to the user. Meanwhile, the visibility of the application data is set to "NOT_VISIBLE_ALL", thereby ensuring that only a user that satisfies the receiving condition of the application data can view the relevant information of the application data.

Corresponding to the client, another embodiment of the present invention provides a server, which is used by an operator to implement the method for directionally sending application data disclosed in the foregoing embodiment.

FIG. 5 is a schematic structural diagram of a server 500 for sending application data according to an embodiment of the present invention. Components of the server 500 are described as follows:
a setting module 501, configured to set visibility visibility of application data to invisible, and set a receiving condition of the application data; and
a sending module 502, configured to send application signaling, where the application signaling carries visibility setting, the receiving condition, and an access path of the application data.

The sending module 502 is further configured to send the application data, so that a client that satisfies the receiving condition of the application data receives the application data through the access path of the application data.

As described in the foregoing, the server may send application signaling or application data over a broadband channel, and may also send application signaling or application data over a broadcast channel. Therefore, in another embodiment of the present invention, the sending module 501 of the server 500 may further be divided into a first sending submodule 511 and a second sending submodule 512, where
the first sending submodule 511 is configured to send the application signaling or the application data over a broadband channel; and
the second receiving submodule 512 is configured to send the application signaling or the application data over a broadcast channel.

During implementation of directional sending of application data by using the server disclosed in this embodiment, an operator may set diversified receiving conditions of the application data, carry the receiving conditions in application signaling, and send the application signaling to a client, which, in combination with visibility setting "NON_VISIBLE_ALL" of the application data, ensures that only a client that satisfies the receiving condition of the application data displays relevant information of the application data to a user. In this way, different application data sent to different users may be implemented.

Through such setting, directional sending of application data is implemented, which can effectively overcome a defect in existing HBBTV specifications, and satisfy a demand that an operator directionally sends application data to a client.

Persons of ordinary skill in the art may be aware that the steps of the methods and units described in the embodiments disclosed in this specification can be implemented by electronic hardware, computer software, or a combination of the two. To clearly describe interchangeability between hardware and software, Steps and components of each embodiment has been generally described according to functions in the foregoing. Whether these functions are executed by hardware or software depends on particular applications and design constraint conditions of the technical solutions. Persons skilled in the art may use different methods to implement the described functions for each particular application, but such implementation should not be construed as a departure from the scope of the present invention.

The steps of the methods described in the embodiments disclosed in this specification may be implemented by hardware, a software program executed by a processor, or a combination of the two. The software programs may be stored in a random access memory (RAM), a memory, a read-only memory (ROM), an electrically programming ROM, an electrically erasable programming ROM, a register, a hard disk, a movable magnetic disk, a CD-ROM, or a storage medium of any other form known in the art. The software or program includes the following steps (in the method claims).

Although some embodiments of the present invention are shown and described, persons skilled in the art should understand that, various modifications may be made to these embodiments without departing from the principle and spirit of the present invention, and such modifications shall fall within the scope of the present invention.

## Claims

1. A method for receiving application data, comprising:
receiving, by a client, application signaling, wherein the application signaling comprises visibility setting, a receiving condition, and an access path of application data, and visibility of the application data is set to invisible;
judging whether the client satisfies the receiving condition of the application data; and
if the client satisfies the receiving condition of the application data, receiving the application data according to the access path of the application data.

2. The method according to claim 1, wherein the receiving condition of the application data comprises: the client plays a specific channel, the client is located in a specific IP address field, the client has a specific attribute, or a user corresponding to the client has a specific attribute.

3. The method according to claim 1, wherein the receiving, by a client, application signaling specifically is: receiving, by the client, the application signaling over a broadband channel or a broadcast channel.

4. The method according to claim 3, wherein the receiving the application data according to the access path of the application data specifically is: receiving the application data over the broadcast channel according to the access path of the application data.

5. The method according to claim 4, wherein the receiving the application data over the broadcast channel according to the access path of the application data specifically is:
switching to a digital video broadcasting DVB channel that is indicated in the access path of the application data, and receiving the application data.

6. The method according to claim 3, wherein the receiving the application data according to the access path of the application data specifically is: receiving the application data over the broadband channel according to the access path of the application data.

7. The method according to claim 6, wherein the receiving the application data over the broadband channel according to the access path of the application data specifically is:
requesting, according to the access path of the application data, sending of the application data; and
receiving the application data.

8. The method according to any one of claims 1 to 7, wherein if the client satisfies the receiving condition of the application data, the receiving the application data according to the access path of the application data specifically is:
if the client satisfies the receiving condition of the application data, after prompting a user to make confirmation, receiving the application data according to the access path of the application data.

9. A method for sending application data, comprising:
sending application signaling, wherein the application signaling carries visibility setting, a receiving condition, and an access path of application data, and visibility of the application data is set to invisible; and
sending the application data, so that a client that satisfies the receiving condition of the application data receives the application data through the access path of the application data.

10. The method according to claim 9, wherein the receiving condition of the application data comprises: the client plays a specific channel, the client is located in a specific IP address field, the client has a specific attribute, or a user corresponding to the client has a specific attribute.

11. The method according to claim 9 or 10, wherein the sending application signaling specifically is: sending the application signaling to the client over a broadband channel or a broadcast channel.

12. The method according to claim 11, wherein the sending the application data, so that a client that satisfies the receiving condition of the application data receives the application data through the access path of the application data specifically is:
sending the application data over the broadcast channel, so that the client that satisfies the receiving condition of the application data switches to a digital video broadcasting DVB channel that is indicated in the access path of the application data, and receives the application data.

13. The method according to claim 11, wherein the sending the application data, so that a client that satisfies the receiving condition of the application data receives the application data through the access path of the application data specifically is:
receiving from the client a request for sending the application data, wherein the request carries the access path of the application data; and
sending the application data to the client over the broadband channel according to the access path of the application data.

14. A client(400), comprising:
a receiving module(401), configured to receive application signaling, wherein the application signaling comprises visibility setting, a receiving condition, and an access path of application data, and visibility of the application data is set to invisible; and
a judging module(402), configured to judge whether the client satisfies the receiving condition of the application data, wherein the receiving condition of the application data is received by the receiving module(401); wherein,
the receiving module(401) is further configured to receive the application data according to the access path of the application data if the judging module(402) judges that the client satisfies the receiving condition of the application data.

15. The client according to claim 14, wherein the receiving module(401) comprises a first receiving submodule(411) and a second receiving submodule(412); wherein
the first receiving submodule(411) is configured to receive the application signaling or the application data over a broadband channel; and
the second receiving submodule(412) is configured to receive the application signaling or the application data over a broadcast channel.

16. The client according to claim 14 or 15, wherein the client further comprises a prompting module(403), wherein the prompting module(403) is configured to, when the judging module(402) judges that the client satisfies the receiving condition of the application data, prompt a user to make confirmation, and after the user makes confirmation, instruct the receiving module(401) to receive the application data according to the access path of the application data.
